# FASCICULE DE BREVET EUROPEEN

(11) **EP 3 169 488 B1**
(45) Date de publication et mention de la délivrance du brevet: **02.06.2021**
(21) Numéro de dépôt: 15733852.6
(22) Date de dépôt: 19.06.2015
(51) Int. Cl.: B25J 9/16

(54) **PROCEDE D'ENDUCTION AVEC PROJECTION D'IMAGE SUR CARROSSERIE**
VERFAHREN ZUM BESCHICHTEN DER KAROSSERIE EINES FAHRZEUGS MIT BILDPROJEKTION
METHOD FOR COATING THE BODYWORK OF A VEHICLE, WITH IMAGE PROJECTION

(30) Priorité: 18.07.2014 FR 1456966
(43) Date de publication de la demande: 24.05.2017
(73) Titulaire: PSA Automobiles SA, 78300 Poissy (FR)
(72) Inventeur: PEREZ, Mathieu, F-92400 Courbevoie (FR)
(74) Mandataire: Fernandez, Francis Lionel
(86) Numéro de dépôt international: PCT/FR2015/051631
(87) Numéro de publication internationale: WO 2016/009120

(56) Documents cités:
- EP-A2- 2 468 463
- WO-A1-2014/025518

## Description

L'invention a trait au domaine de la fabrication des véhicules automobiles, et plus précisément à l'enduction (notamment mise en peinture ou mise en étanchéité) des carrosseries des véhicules automobiles.

L'enduction est couramment réalisée de manière automatisée au moyen de robots. Les carrosseries sont fixées sur des chariots ou suspendues à des portiques, qui sont amenés au défilé (de manière continue ou séquentielle) à des postes d'enduction où des robots munis de buses procèdent à l'application de l'enduit (notamment peinture ou produit d'étanchéité) par pulvérisation.

L'application d'un enduit est une opération délicate, car les pièces de carrosserie sont des pièces tridimensionnelles aux formes complexes, munies de reliefs et d'ouvertures. Pour appliquer la juste quantité d'enduit, il est donc nécessaire de faire suivre aux buses des trajectoires optimisées, calculées en fonction de la topographie de la pièce à enduire.

On connaît des techniques d'enduction dans lesquelles le robot suit préalablement à la mise en série une phase d'apprentissage lors de laquelle sont acquises les coordonnées tridimensionnelles d'une buse tenue à la main par un opérateur lors d'une enduction manuelle de la pièce à enduire, cf. par ex. la demande internationale WO 2012/150485.

Cette technique ne résout nullement le problème de l'optimisation des trajectoires, puisqu'elle ne fait que reproduire les gestes de l'opérateur lors de la phase d'apprentissage. Or, rien ne permet de certifier que les gestes de l'opérateur sont optimaux. Au contraire, des erreurs peuvent être introduites, qui se répéteront tout au long de la production de série (variation de la distance entre la buse et la pièce à enduire, vitesse de déplacement de la buse non constante, hésitations, reprises).

C'est pourquoi il est préférable de recourir au calcul et à la simulation numérique. Cette technique décrite dans le document WO 2014/025518 A1 permet d'optimiser l'application de l'enduit, dans une certaine mesure cependant.

En effet, même s'il est possible de calculer une trajectoire optimale, cette trajectoire n'est dans la pratique pas nécessairement suivie par la buse d'enduction, car, dans l'automate (API ou contrôleur) du robot portant la buse, priorité est donnée à la vitesse de déplacement plutôt qu'à la précision du positionnement.

Il en résulte des décalages entre la trajectoire suivie réellement par le robot (et plus précisément la buse) et le tracé théorique qu'il devrait suivre. Pour s'assurer d'une application correcte de l'enduit, une mise au point est effectuée lors de la phase d'industrialisation (préalablement à la mise en série). Cette mise au point est réalisée manuellement par des opérateurs spécialisés (appelés trajectoiristes), qui procèdent à un recalage de la trajectoire dans le programme de l'automate du robot, en fonction de leur propre appréciation de la qualité de l'application de l'enduit.

Cette technique est meilleure que la précédente, mais elle demeure perfectible, car elle repose entièrement sur la capacité du trajectoiriste à correctement évaluer les erreurs supposées de trajectoire, et à correctement reprogrammer celle-ci.

Or, le trajectoiriste ne visualise pas nécessairement correctement les zones enduites, car la différence de teinte avec les zones non enduites peut ne pas apparaître au premier coup d'œil (par ex. lors de l'application d'une peinture de couleur noire mate sur une caisse revêtue d'un enduit d'étanchéité de couleur noire mate aussi).

Un premier objectif est de proposer une solution permettant d'optimiser la mise au point de l'enduction sur les chaînes de production automobile.

Un deuxième objectif est de faciliter le travail des trajectoiristes en minimisant les opérations réalisées au jugé.

Un troisième objectif est de faciliter la détection des erreurs lors de l'enduction.

A cet effet, il est proposé un procédé d'application d'un enduit sur une pièce de carrosserie de véhicule automobile au moyen d'un robot équipé d'une buse pour la pulvérisation de l'enduit selon la revendication indépendante 1, ce procédé comprenant une opération de pilotage du robot pour faire suivre à la buse une trajectoire prédéterminée, et une opération de restitution en temps réel, sur la pièce de carrosserie, d'une image des surfaces présumées enduites.

Ce procédé facilite la visualisation des surfaces enduites par l'opérateur chargé de la mise au point, et facilite ainsi cette mise au point.

Diverses caractéristiques supplémentaires peuvent être prévues, seules ou en combinaison :
- l'image des surfaces présumées enduites est restituée directement sur la pièce physique de carrosserie, au moyen d'un appareil de projection d'images placé en regard de celle-ci ;
- l'image est restituée indirectement sur la pièce physique de carrosserie dans un environnement de réalité augmentée, par une technique d'incrustation d'image ;
- l'image est restituée par superposition sur une image de la pièce physique de carrosserie, filmée au moyen d'une caméra ;
- l'image est restituée par projection sur une surface transparente au travers de laquelle est visible la pièce physique de carrosserie, de sorte à être superposée à celle-ci du point de vue d'un observateur dont le regard pointe vers la pièce physique au travers de la surface transparente ;
- la surface est un verre de lunette.

Les opérations supplémentaires suivantes sont prévues, consistant à :
- calculer en temps réel, lors de l'application de l'enduit, un tracé réel d'application de l'enduit, correspondant à une projection, sur la pièce de carrosserie, de la trajectoire suivie par la buse ;
- restituer en temps réel sur la pièce de carrosserie, lors de l'application de l'enduit, une image du tracé réel ainsi calculé.

Ce tracé réel calculé présente par exemple une largeur correspondant au diamètre présumé d'un cône de projection issu de la buse, à son intersection avec la pièce de carrosserie.

La restitution des surfaces présumées enduites est par exemple réalisée par projection en temps réel sur la pièce de carrosserie d'une image virtuelle de celle-ci, limitée aux surfaces présumées enduites.

Selon un mode particulier de réalisation, l'image virtuelle de la pièce de carrosserie est générée par un système de conception assistée par ordinateur.

D'autres objets et avantages de l'invention apparaîtront à la lumière de la description d'un mode de réalisation, faite ci-après en référence aux dessins annexés dans lesquels :
- la figure 1 est une vue en perspective montrant un poste d'enduction d'une carrosserie de véhicule automobile ;
- la figure 2 est une vue, à échelle agrandie, d'un détail de la figure 1.

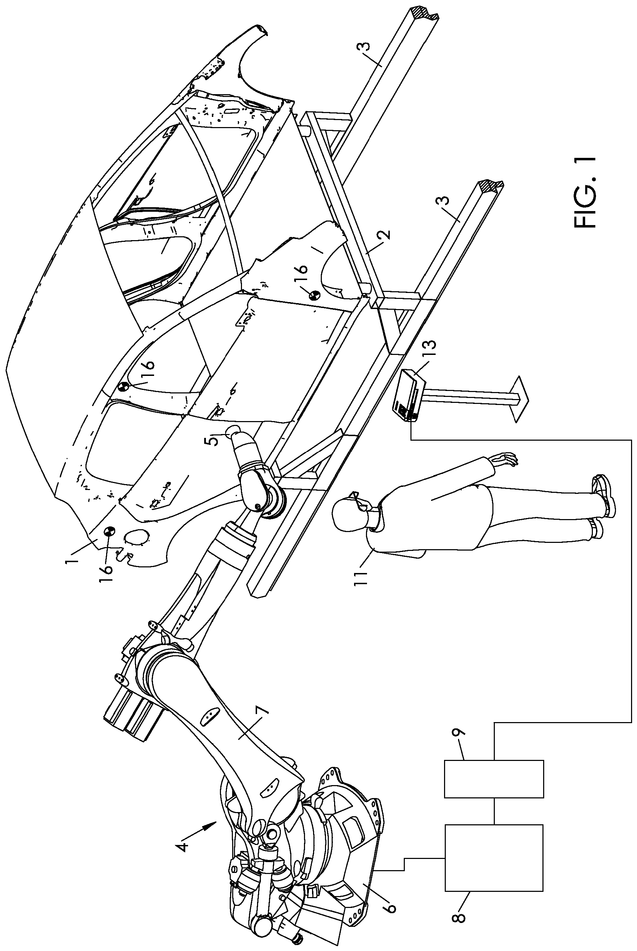

Sur la figure 1 est représenté un poste d'enduction d'une pièce **1** de carrosserie d'un véhicule automobile, lors d'une phase de mise au point préalable à la mise en série. L'enduit utilisé peut notamment être une peinture ou un produit d'étanchéité.

Comme on peut le voir, la pièce **1** de carrosserie est montée sur un support **2** (ici un chariot) qui peut être fixe ou, comme dans l'exemple illustré, monté coulissant sur un guide, formé par exemple par une paire de rails **3.**

La pièce **1** de carrosserie peut être un élément monobloc (il peut s'agir d'une caisse, de portes latérales, d'un capot, d'un volet de coffre, etc.) ou formée par un assemblage d'éléments ; il peut notamment s'agir d'une carrosserie partielle (comme dans l'exemple illustré, où la pièce **1** comprend une caisse et des portes latérales mais est dépourvue de capot et de volet de coffre) ou complète.

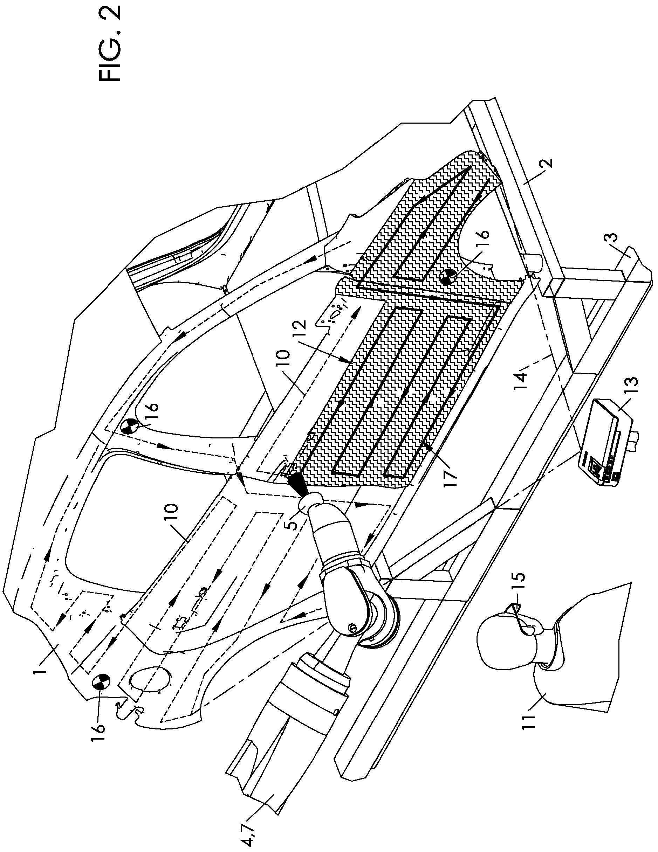

L'application de l'enduit sur la pièce **1** est réalisée au moyen d'un (ou plusieurs) robot(s) **4** équipé(s) d'une buse **5** pour la pulvérisation de l'enduit sur la pièce **1** de carrosserie. Dans l'exemple illustré sur la figure 1, le robot **4** est multiaxes, et comprend un socle **6** sur lequel est monté un bras **7** articulé à une extrémité duquel est montée la buse **5.** La buse **5** projette l'enduit sous forme, globalement, d'un cône de projection que l'on a matérialisé en noir sur la figure 2.

Le robot **4** est piloté via un API (automate programmable industriel) **8,** qui peut être déporté, en étant par exemple situé dans un local de commande. Plusieurs robots peuvent être pilotés via un même API. L'API est lui-même relié à une unité **9** centrale d'ordinateur.

Préalablement à l'enduction, une trajectoire optimale doit être définie pour la buse **5,** de sorte à couvrir la pièce **1** tout en minimisant la quantité d'enduit consommée.

A cet effet, on détermine sur la pièce **1** un tracé **10** théorique pour l'application de l'enduit. Cette opération peut être réalisée au moyen d'un outil de simulation numérique, typiquement dans un environnement virtuel de conception assistée par ordinateur (CAO), dans lequel le tracé théorique est réalisé sur une représentation virtuelle (avatar) tridimensionnelle de la pièce **1.**

Ce tracé théorique, mémorisé dans l'unité **9** centrale, se présente sous forme d'une ligne localement courbe, droite ou brisée, qui s'étend sur la surface à enduire de la pièce **1** de carrosserie de telle sorte que le balayage du tracé par un disque d'enduction correspondant à l'intersection du cône de projection de la buse avec la surface à enduire couvre la totalité de cette surface. La taille du disque d'enduit variant avec la distance de la buse **5** à la pièce **1** de carrosserie, on comprend que la prise en compte de cette distance et de l'ouverture angulaire du cône de projection est nécessaire dans la détermination du tracé théorique. On a figuré sur la figure 2, en traits pointillés, le tracé **10** théorique sous forme d'une ligne brisée et fléchée.

Une deuxième opération consiste à calculer pour la buse **5** une trajectoire en regard du tracé théorique ainsi déterminé. Cette trajectoire n'est pas nécessairement une translation spatiale du tracé théorique d'une valeur correspondant à la distance supposée de la buse **5** à la surface de la pièce **1** de carrosserie. En effet, le mode de programmation des robots multiaxes impose généralement de programmer un nuage limité de points, l'API **8** calculant une trajectoire interpolée minimisant les distances et/ou maximisant la vitesse de déplacement du robot **4,** aux fins de productivité.

Il en résulte que la trajectoire calculée pour la buse **5** ne recouvre que partiellement le tracé **10** théorique, ce qui nécessite une mise au point ultérieure permettant d'optimiser l'application de l'enduit. Cette mise au point est réalisée sous le contrôle d'un opérateur **11** (appelé trajectoiriste), qui doit surveiller l'enduction en temps réel. Compte tenu des identités de teinte qui peuvent exister entre la pièce **1** non enduite et la pièce enduite (typiquement lorsque l'enduction est une mise en peinture de couleur noire, réalisée sur la pièce **1** préalablement revêtue d'un enduit d'étanchéité de couleur noire), la détection à l'œil par le trajectoiriste **11** de zones non couvertes n'est pas aisée. Un contrôle rigoureux nécessite, après que le robot **4** est parvenu au bout de la trajectoire prédéfinie, le prélèvement de la pièce **1** sur la ligne d'enduction, son séchage, suivi d'un examen de sa surface. Cette procédure est longue et fastidieuse.

Pour épargner au trajectoiriste **11** cette procédure et raccourcir les temps de mise au point, il est prévu une restitution en temps réel, sur la pièce **1,** d'une image **12** des surfaces présumées enduites pour permettre leur visualisation directe et en temps réel par le trajectoiriste **11.** Dans le contexte de cette restitution, l'expression « pièce de carrosserie » ne renvoie pas nécessairement à la pièce physique elle-même dans le monde réel, mais peut également désigner une image de celle-ci, comme nous allons le voir.

Aux fins de cette restitution, il est adjoint aux opérations précitées une première opération supplémentaire consistant à calculer en temps réel, lors de l'application de l'enduit, un tracé d'application de l'enduit, correspondant à une projection, sur la pièce **1** de carrosserie, de la trajectoire effectivement suivie par la buse **5.**

Une deuxième opération supplémentaire consiste à restituer en temps réel sur la pièce **1** de carrosserie, lors de l'application de l'enduit, une image **12** du tracé réel ainsi calculé qui, en tenant compte de la largeur du tracé, égale au diamètre du disque d'enduction, recouvre les surfaces présumées enduites.

L'expression « présumées enduites » est employée pour rendre compte des écarts qui peuvent exister entre la réalité matérielle (les surfaces réellement enduites) et les calculs effectués par ordinateur. La présomption que des surfaces sont effectivement enduites est cependant forte, car le calcul de ces surfaces n'est pas complètement théorique mais fondé sur la trajectoire réelle suivie par la buse **5.**

La restitution de l'image **12** peut être effectuée directement sur la pièce **1** physique de carrosserie, au moyen d'un appareil **13** de projection d'images (ou projecteur) placé en regard de celle-ci et dont le champ **14** (matérialisé en trait mixte sur la figure 2) englobe (au moins partiellement, et de préférence totalement) la pièce **1.** Le projecteur **13** est par exemple relié à l'unité **9** centrale, qui lui adresse un flux vidéo dans lequel l'image **12** est adaptée à la position relative du projecteur **13** et de la pièce **1.** Ainsi, dans le cas (illustré) où le projecteur **13** n'est pas placé dans une position frontale face à la pièce **1** mais décalée par rapport à celle-ci (vers le haut, vers le bas, l'avant et/ou l'arrière), une opération de programmation préalable est réalisée pour transformer l'image **12** par un procédé d'anamorphose de telle sorte que l'image **12** restituée sur la pièce **1** ne soit pas entachée de distorsion majeure due à l'angle de projection.

Selon un deuxième mode de réalisation, la restitution est effectuée indirectement sur la pièce **1** physique de carrosserie dans un environnement de réalité augmentée, par une technique d'incrustation d'image.

Ainsi, l'image **12** peut être restituée par superposition sur une image de la pièce **1** physique, filmée au moyen d'une caméra. En d'autres termes, la pièce **1** physique est filmée (de préférence en plan fixe) tout au long de l'application de l'enduit, son image restituée sur un écran de contrôle (par exemple sur un écran d'ordinateur ou sur une tablette informatique portative), et l'image **12** est superposée à l'image de la pièce ainsi restituée.

En variante, l'image **12** est restituée par projection sur une surface **15** transparente au travers de laquelle est visible la pièce **1** physique de carrosserie, de sorte à être superposée à celle-ci du point de vue du trajectoiriste, dont le regard pointe vers la pièce **1** physique au travers de la surface transparente. En pratique, cette surface **15** est par exemple un verre de lunette. Cet exemple de réalisation est illustré sur la figure 2, et l'on suppose alors que la représentation que l'on a faite de la pièce **1** de carrosserie est telle que la perçoit le trajectoiriste **11** (en supposant absent le projecteur **13** représenté pour le premier mode de réalisation décrit ci-dessus).

La pièce **1** physique est de préférence munie de marqueurs **16** passifs destinés à permettre :
- dans le premier mode de réalisation, la projection de l'image **12** du à l'endroit où se trouve effectivement la pièce **1,**
- dans le deuxième mode de réalisation, de positionner spatialement le référentiel associé à la pièce **1** et de caler sur celui-ci le référentiel associé à l'image **12.**

On a représenté sur les figures de tels marqueurs **16** sous forme classique de pastilles à quadrants noirs. Une alternative possible consiste à filmer la pièce **1** et effectuer une reconnaissance de forme pour localiser la pièce **1** (avec son orientation) dans l'espace.

Selon un mode de réalisation particulièrement avantageux, illustré sur la figure 2, l'image **12** est une image virtuelle de la pièce **1** (générée par exemple par un système de conception assistée par ordinateur ou CAO), limitée aux surfaces présumées enduites et dont la projection est réalisée en temps réel au fur et à mesure de l'avancée de la buse **5** le long de sa trajectoire. Sur la figure 2, les surfaces présumées enduites, restituées par l'image **12,** apparaissent grisées. Dans l'exemple illustré, on a adjoint (mais cette adjonction est optionnelle) une image **17** de la trajectoire suivie en temps réel par la buse **5,** de sorte à compléter les informations visuelles à disposition du trajectoiriste **11** et lui permettre, outre de vérifier la matérialité de l'enduction, d'estimer son homogénéité.

Le robot **4** est piloté pour faire suivre à la buse **5** la trajectoire calculée et appliquer l'enduit sur la pièce **1** de carrosserie. Au fur et à mesure de l'avancée de la buse **5** le long de la trajectoire, l'image **12** restitue en temps réel les surfaces enduites de la pièce **1** pour les rendre visibles par le trajectoiriste **11,** à la manière d'un coloriage progressif. Pour faciliter la visualisation, l'image **12** peut apparaître dans des teintes contrastant avec la couleur générale de la pièce **1** non enduite (par ex. en rouge vif, en jaune ou en mauve).

La restitution (directe ou indirecte), en temps réel, des surfaces présumées enduites sur la pièce **1** de carrosserie permet au trajectoiriste d'effectuer dans l'API **8** du robot **4** les modifications de programme qu'il estime nécessaire pour, le cas échéant, corriger la trajectoire suivie par la buse **5** lors de l'application de l'enduit de sorte à couvrir d'éventuelles zones non enduites et/ou d'améliorer l'homogénéité de l'enduction. Cette restitution facilite donc la mise au point de l'enduction en vue de l'industrialisation.

Les corrections effectuées au jugé sont minimisées.

## Revendications

1. Procédé d'application d'un enduit sur une pièce **(1)** de carrosserie de véhicule automobile au moyen d'un robot **(4)** équipé d'une buse **(5)** pour la pulvérisation de l'enduit, ce procédé comprenant une opération de pilotage du robot **(4)** pour faire suivre à la buse **(5)** une trajectoire prédéterminée, ce procédé étant **caractérisé en ce qu'**il comprend en outre une opération de restitution en temps réel, sur la pièce **(1)** de carrosserie, d'une image **(12)** des surfaces présumées enduites pour permettre leur visualisation directe et en temps réel par-un trajectoiriste, comprenant les opérations consistant à :
- calculer en temps réel, lors de l'application de l'enduit, un tracé réel d'application de l'enduit, correspondant à une projection, sur la pièce **(1)** de carrosserie, de la trajectoire suivie par la buse **(5)** ;
- restituer en temps réel sur la pièce **(1)** de carrosserie, lors de l'application de l'enduit, une image **(17)** du tracé réel ainsi calculé.

2. Procédé selon la revendication 1, **caractérisé en ce que** l'image **(12)** des surfaces présumées enduites est restituée directement sur la pièce **(1)** physique de carrosserie, au moyen d'un appareil **(13)** de projection d'images placé en regard de celle-ci.

3. Procédé selon la revendication 1, **caractérisé en ce que** l'image **(12)** est restituée indirectement sur la pièce **(1)** physique de carrosserie dans un environnement de réalité augmentée, par une technique d'incrustation d'image.

4. Procédé selon la revendication 3, **caractérisé en ce que** l'image **(12)** est restituée par superposition sur une image de la pièce **(1)** physique de carrosserie, filmée au moyen d'une caméra.

5. Procédé selon la revendication 3, **caractérisé en ce que** l'image **(12)** est restituée par projection sur une surface **(15)** transparente au travers de laquelle est visible la pièce **(1)** physique de carrosserie, de sorte à être superposée à celle-ci du point de vue du trajectoiriste **(11)** dont le regard pointe vers la pièce **(1)** physique au travers de la surface **(15)** transparente.

6. Procédé selon la revendication 5, **caractérisé en ce que** la surface **(15)** est un verre de lunette.

7. Procédé selon l'une des revendications précédentes, **caractérisé en ce que** le tracé réel calculé présente une largeur correspondant au diamètre présumé d'un cône de projection issu de la buse, à son intersection avec la pièce **(1)** de carrosserie.

8. Procédé selon l'une des revendications précédentes, **caractérisé en ce que** la restitution des surfaces présumées enduites est réalisée par projection en temps réel sur la pièce **(1)** de carrosserie d'une image virtuelle de celle-ci, limitée aux surfaces présumées enduites.

9. Procédé selon la revendication 8, **caractérisé en ce que** l'image virtuelle de la pièce **(1)** de carrosserie est générée par un système de conception assistée par ordinateur.

## Patentansprüche

1. Verfahren zum Auftragen einer Beschichtung auf ein Karosserieteil (1) eines Kraftfahrzeugs mittels eines Roboters (4), der mit einer Düse (5) zum Sprühen der Beschichtung ausgestattet ist, wobei dieses Verfahren einen Vorgang der Steuerung des Roboters (4) umfasst, um die Düse (5) einer vorbestimmten Trajektorie folgen zu lassen, wobei dieses Verfahren **dadurch gekennzeichnet ist, dass** es außerdem einen Vorgang der Echtzeit-Restitution eines Bildes (12) der mutmaßlich beschichteten Oberflächen auf dem Karosserieteil (1) umfasst, um deren direkte und Echtzeit-Betrachtung durch einen Trajektorien-Operator zu ermöglichen, mit den Vorgängen, die darin bestehen:
Berechnung eines realen Beschichtungsauftragsweges in Echtzeit während des Auftragens der Beschichtung, der einer Projektion der von der Düse (5) verfolgten Trajektorie auf das Karosserieteil (1) entspricht;
in Echtzeit auf dem Karosserieteil (1), während des Auftragens der Beschichtung, ein Bild (17) des so berechneten realen Pfades wiederherzustellen.

2. Verfahren nach Anspruch 1, **dadurch gekennzeichnet, dass** das Bild (12) der vermutlich beschichteten Flächen mittels einer gegenüberliegenden Bildprojektionsvorrichtung (13) direkt auf das physikalische Karosserieteil (1) zurückgeführt wird.

3. Verfahren nach Anspruch 1, **dadurch gekennzeichnet, dass** das Bild (12) indirekt auf dem physischen Körperteil (1) in einer Augmented-Reality-Umgebung mit Hilfe einer Bildeinbettungstechnik wiederhergestellt wird.

4. Verfahren nach Anspruch 3, **dadurch gekennzeichnet, dass** das Bild (12) durch Überlagerung mit einem Bild des physikalischen Karosserieteils (1), das mit einer Kamera gefilmt wurde, wiederhergestellt wird.

5. Verfahren nach Anspruch 3, **dadurch gekennzeichnet, dass** das Bild (12) durch Projektion auf eine transparente Fläche (15), durch die das physische Karosserieteil (1) sichtbar ist, wiederhergestellt wird, so dass es aus der Sicht des Trajektorien-Operator (11), dessen Blick durch die transparente Fläche (15) auf das physische Teil (1) gerichtet ist, überlagert wird.

6. Verfahren nach Anspruch 5, **dadurch gekennzeichnet, dass** die Oberfläche (15) ein Brillenglas ist.

7. Verfahren nach einem der vorhergehenden Ansprüche, **dadurch gekennzeichnet, dass** der berechnete Ist-Weg eine Breite aufweist, die dem angenommenen Durchmesser eines Projektionskegels aus der Düse an ihrem Schnittpunkt mit dem Körperteil (1) entspricht.

8. Verfahren nach einem der vorhergehenden Ansprüche, **dadurch gekennzeichnet, dass** die Wiederherstellung der vermutlich beschichteten Flächen durch Echtzeitprojektion eines virtuellen Bildes des Karosserieteils (1) auf dieses, begrenzt auf die vermutlich beschichteten Flächen, erfolgt.

9. Verfahren nach Anspruch 8, **dadurch gekennzeichnet, dass** das virtuelle Abbild des Karosserieteils (1) durch ein computergestütztes Konstruktionssystem erzeugt wird.

## Claims

1. Method of applying a coating to a motor vehicle bodywork part (1) by means of a robot (4) equipped with a nozzle (5) for spraying the coating, this method comprising an operation of controlling the robot (4) to make the nozzle (5) follow a predetermined trajectory, this method being **characterised in that** it also comprises an operation of real-time restitution, on the bodywork part (1), of an image (12) of the presumed coated surfaces to enable them to be viewed directly and in real time by a trajectory operator, comprising the operations consisting in :
calculating in real time, during the application of the coating, a real coating application path, corresponding to a projection, on the bodywork part (1), of the trajectory followed by the nozzle (5);
restoring in real time on the bodywork part (1), during the application of the coating, an image (17) of the real path thus calculated.

2. Method according to claim 1, **characterised in that** the image (12) of the presumably coated surfaces is restored directly onto the physical bodywork part (1) by means of an image projection apparatus (13) placed opposite it.

3. The method according to claim 1, **characterised in that** the image (12) is reproduced indirectly on the physical bodywork part (1) in an augmented reality environment, by means of an image inset technique.

4. The method according to claim 3, **characterised in that** the image (12) is restored by superimposing it on an image of the physical body part (1), filmed by means of a camera.

5. Method according to claim 3, **characterized in that** the image (12) is restored by projection onto a transparent surface (15) through which the physical bodywork part (1) is visible, so as to be superimposed thereon from the point of view of the trajectory operator (11) whose gaze points to the physical part (1) through the transparent surface (15).

6. Method according to claim 5, **characterised in that** the surface (15) is a spectacle glass.

7. A method according to any of the preceding claims, **characterised in that** the calculated actual path has a width corresponding to the assumed diameter of a projection cone from the nozzle at its intersection with the body part (1).

8. Method according to one of the preceding claims, **characterised in that** the restitution of the presumably coated surfaces is carried out by real-time projection onto the bodywork part (1) of a virtual image thereof, limited to the presumably coated surfaces.

9. Method according to claim 8, **characterised in that** the virtual image of the bodywork part (1) is generated by a computer-aided design system.
